**Europäisches Patentamt**

(19) **European Patent Office**

**Office européen des brevets**

(11) Veröffentlichungsnummer: **0 109 974**
**B1**

(12) **EUROPÄISCHE PATENTSCHRIFT**

(45) Veröffentlichungstag der Patentschrift:
29.10.86

(51) Int. Cl.⁴: **H 04 N 9/67**

(21) Anmeldenummer: **82111096.2**

(22) Anmeldetag: **01.12.82**

---

(54) Integrierte Digitalschaltung mit einem Multiplizierer für einen Farbfernsehempfänger mit digitaler Signalverarbeitung.

---

(43) Veröffentlichungstag der Anmeldung:
13.06.84 Patentblatt 84/24

(45) Bekanntmachung des Hinweises auf die Patenterteilung:
29.10.86 Patentblatt 86/44

(84) Benannte Vertragsstaaten:
DE FR GB IT NL

(56) Entgegenhaltungen:
DE - A - 2 854 236

EINE NEUE DIMENSION-VLSI-DIGITAL-TV-SYSTEM,
September 1981, Intermetall, Freiburg, DE.

(73) Patentinhaber: **Deutsche ITT Industries GmbH,**
**Hans-Bunte-Strasse 19 Postfach 840, D-7800 Freiburg**
**(DE)**

(84) Benannte Vertragsstaaten: **DE**

(73) Patentinhaber: **ITT INDUSTRIES INC., 320 Park Avenue,**
**New York, NY 10022 (US)**

(84) Benannte Vertragsstaaten: **FR GB IT NL**

(72) Erfinder: **Freyberger, Laurin Clemens, Dipl.-Ing., Unter**
**Stad 3, D-7836 Bahlingen (DE)**
Erfinder: **Schmidtpott, Friedrich, Dipl.-Ing.,**
**Gewerbestrasse 13, D-7803 Gundelfingen (DE)**

(74) Vertreter: **Morstadt, Volker, Dipl.-Ing. et al, c/o**
**Deutsche ITT Industries GmbH Patent/Lizenzabteilung**
**Postfach 840 Hans-Bunte-Strasse 19,**
**D-7800 Freiburg/Brsg. (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine integrierte Digitalschaltung für einen Farbfernsehempfänger mit digitaler Signalverarbeitung, der einen zwei demodulierte digitale Farbdifferenzsignale jeweils mit einem digitalen Farbsättigungssignal in Zeitmultiplexbetrieb vervielfachenden ersten Multiplizierer enthält, vgl. den Oberbegriff des Anspruchs 1.

Eine derartige integrierte Digitalschaltung ist aus der Veröffentlichung «DIGIT 2000 VLSI-Digital-TV-System», März 1982, in Form der Beschreibung der integrierten Schaltungen MAA 2100, MAA 2200 auf den Seiten 4–3 bis 4–5 bekannt. In Bild 4–2 auf Seite 4–3 ist der eingangs erwähnte Multiplizierer als Farbsättigungsmultiplizierer bezeichnet, weil er aus den ihm vorgeschalteten Stufen einerseits die demodulierten digitalen Farbdifferenzsignale und andererseits über eine mit IM-Bus-Interface bezeichnete Stufe ein digitales Helligkeits-Einstellsignal, also das erwähnte digitale Farbsättigungssignal, zugeführt erhält. Bezüglich der beiden Farbdifferenzsignale wird dabei in Zeitmultiplexbetrieb gearbeitet, ebenso wie bei der Abgabe der entsprechenden Ausgangssignale an die beiden nachgeschalteten Digital-Analog-Wandler für die beiden analogen Farbdifferenzsignale.

Wie in der genannten Veröffentlichung weiter beschrieben ist, sind die beiden erwähnten integrierten Schaltungen MAA 2100, MAA 2200 Bestandteil eines IC-Satzes, mit dem Farbfernsehempfänger mit digitaler Signalverarbeitung realisiert werden können.

Bei der Weiterentwicklung und Verbesserung dieser als Ergebnis einer ersten Entwicklungsstufe geschaffenen integrierten Schaltungen haben die Erfinder erkannt, dass der bekannte Farbsättigungsmultiplizierer nicht nur für diesen speziellen Zweck verwendet werden kann, sondern dass die Gesamtanordnung der digitalen Signalverarbeitung des empfangenen Bildsignals durch eine Mehrfachausnutzung des Multiplizierers vereinfacht werden kann. Der in den Ansprüchen gekennzeichneten Erfindung liegt daher die Aufgabe zugrunde, die bekannte Digitalschaltung so weiterzubilden, dass damit eine Mehrfachausnutzung des Multiplizierers erfolgen kann.

Ein Vorteil der Erfindung besteht darin, dass die bei der bekannten Anordnung übliche analoge R-G-B-Matrix zur Erzeugung der analogen Farbsignale entfallen kann, da bereits am Ausgang der bei der Erfindung vorgesehenen Digital-Analog-Wandler diese analogen Farbsignale auftreten. Ferner bietet die Erfindung in einer abgewandelten Form den Vorteil, dass die bei NTSC-Farbfernsehempfängern vorzusehende Einstellmöglichkeit zum Ausgleich von Farbverfälschungen ebenfalls mit dem Farbsättigungsmultiplizierer realisiert werden kann.

Die Erfindung wird nun anhand der Figuren der Zeichnung näher erläutert.

Fig. 1 zeigt in Form eines Blockschaltbilds schematisch ein Ausführungsbeispiel der Erfindung,

Fig. 2 zeigt das Blockschaltbild einer weiteren Ausführungsform der Erfindung, und

Fig. 3 zeigt das Blockschaltbild einer Ausführungsform für die erwähnte Abwandlung der Erfindung bei NTSC-Farbfernsehempfängern.

In den Figuren sind Digitalsignale durch kleingeschriebene Buchstaben und Analog-Signale durch Grossbuchstaben gekennzeichnet.

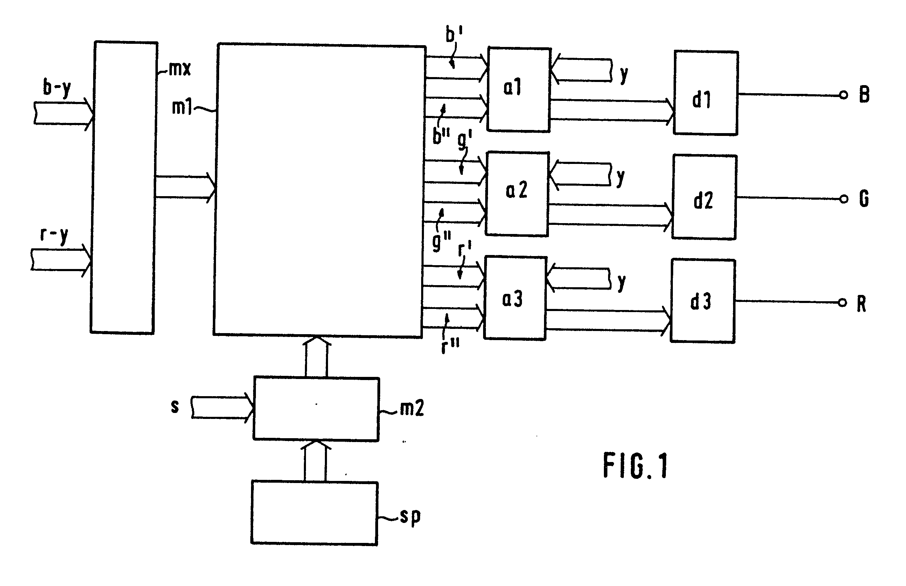

Im Blockschaltbild nach Fig. 1 sind die auf bekannte Weise aus dem gesendeten und empfangenen Fernsehsignal gewonnenen digitalen Farbdifferenzsignale b–y, r–y dem Multiplexer mx zugeführt, dessen Ausgang mit dem einen Eingang des ersten Multiplizierers m1 verbunden ist. An dessen anderem Eingang, dem bei der eingangs erwähnten bekannten Anordnung das Farbsättigungssignal zugeführt ist, liegt der Ausgang des zweiten Multiplizierers m2, dessen einem Eingang das Farbsättigungssignal s zugeführt ist und dessen anderer Eingang mit dem Ausgang des Speichers sp verbunden ist.

Der erste Multiplizierer m1 gibt wiederum in Zeitmultiplex drei Farbsignalpaare b′, b″; g′, g″; r′, r″ ab, wobei jedes Signal eines Farbsignalpaars jeweils dem ersten bzw. dem zweiten Eingang des ersten, zweiten bzw. dritten Addierers a1, a2, a3 zugeführt ist. Jeder Addierer weist einen dritten Eingang auf, dem bei allen drei Addierern das ebenfalls in bekannter Weise aus dem gesendeten und empfangenen Fernsehsignal gewonnene digitale Luminanzsignal y zugeführt ist.

Der Speicher sp enthält Multiplikatoren b1, b2; g1, g2; r1, r2, die wie im folgenden angegeben definiert sind:

$$b' = s(b-y)b1, b'' = s(r-y)b2$$
$$g' = s(b-y)g1, g'' = s(r-y)r2$$

Wie ersichtlich ist, lässt sich mit diesen sechs Multiplikatoren die Zusammensetzung der am jeweiligen Ausgang der drei Addierer a1, a2, a3 entstehenden Signale beeinflussen und somit auch die analogen Signale, die am Ausgang der drei Digital-Analog-Wandler d1, d2, d3 entstehen, die dem jeweiligen Ausgang eines Addierers nachgeschaltet sind.

Die Multiplikatoren b1, b2; g1, g2; r1, r2 bzw. deren Zahlenwerte, sind vom Hersteller des Farbfernsehempfängers im Speicher sp fest abgespeichert, oder sie können während des Betriebs des Farbfernsehempfängers durch ein dem Speicher zugeführtes entsprechendes Signal veränderbar oder einstellbar sein. Als solche Einstellbarkeit kann die bereits erwähnte Farbkorrektur bei NTSC-Farbfernsehempfängern angesehen werden, wie dies weiter unten noch beschrieben wird. Die Veränderbarkeit der im Speicher sp enthaltenen Multiplikatoren kann aber auch zur Erzeugung von farblichen Bildeffekten herangezogen werden, wenn etwa mittels einer entsprechenden Schaltung ein periodisch oder temporär veränderliches Signal erzeugt wird, mit dem die gesendete und empfangene Farbzusammensetzung verändert, wie z.B. in die Komplementärfarben verkehrt, werden kann. Ein derart veränderliches Signal kann aber auch aus dem gesendeten und empfangenen Farbfernsehsignal direkt stammen, wie z.B. bei einer neueren Variante des NTSC-Systems, die unter dem Begriff Vertical Interval Reference bekannt geworden ist und bei der in jeder neunzehnten Zeile eines gesendeten Halbbildes ein Referenzsignal für richtige Farbe übertragen wird, das im Empfänger zur selbsttätigen Farbkorrektur herangezogen wird.

Wenn übliche Farbbildröhren mit einem analogen Luminanzsignal Y nach der bekannten Gleichung $Y = 0,3R + 0,59G + 0,11B$ angesteuert werden sollen, haben die Multiplikatoren folgende dezimale Zahlenwerte:

$$b1 = 1/b^*; b2 = r = 0; g1 = -0,19/b^*$$
$$g2 = -0,51/r^*; r2 = 1/r^*$$

wobei mit $b^*$, $r^*$ senderseitig das gesendete Signal beeinflussende Faktoren bezeichnet sind, mit denen das Blau- bzw. das Rot-Differenzsignal entsprechend der Sender-Farbfernsehnorm multipliziert ist. Diese Faktoren haben für die PAL- und NTSC-Norm bekanntlich die Werte $b^* = 0,493$, $r^* = 0,877$, dagegen bei der SECAM-Norm die Werte $b^* = 1,5$, $r^* = -1,9$.

Bei der eben erwähnten speziellen Ansteuerungsvariante üblicher Farbbildröhren sind also je nach Fernsehnorm, für die der Farbfernsehempfänger gebaut ist, die entsprechenden Zahlenwerte im Speicher sp durch entsprechende Einprogrammierung seitens des Geräteherstellers enthalten. Als Speicher bieten sich für diesen Zweck bevorzugt statische Speicher, insbesondere Festwertspeicher oder die verschiedenen Arten von programmierbaren und umprogrammierbaren Festwertspeichern, an.

Die Digitalschaltung nach der Erfindung kann jedoch nicht nur zur Ansteuerung üblicher Farbbildröhren verwendet werden, sondern sie ist auch in der Lage, solche Farbbildröhren anzusteuer, deren Farborte von denen der üblichen Farbbildröhren, die mit der erwähnten Gleichung für das analoge Luminanzsignal Y angesteuert werden, abweichen. Dann gilt für die Ansteuerung solcher Farbbildröhren die Gleichung:

$$Y = 0,3R'R + 0,59G'G + 0,11B'B$$

und die Multiplikatoren haben folgende dezimale Zahlenwerte:

$$b1 = 1/b^*; b2 = r1 = 0; g1 = -0,19B'/G'b^*$$
$$g2 = -0,51R'/G'r^*; r2 = 1/r^*$$

Hierbei haben die Faktoren $b^*$, $r^*$ die oben bereits erwähnte Bedeutung. Durch die eben geschilderte Ausgestaltung der Erfindung ist es somit ohne weiteres möglich, für die nach den üblichen Fernsehnormen gesendeten Signale auch nicht normgerechte Farbbildröhren zu verwenden, ohne dass es hierzu eines wesentlichen zusätzlichen Geräteaufwandes bedarf.

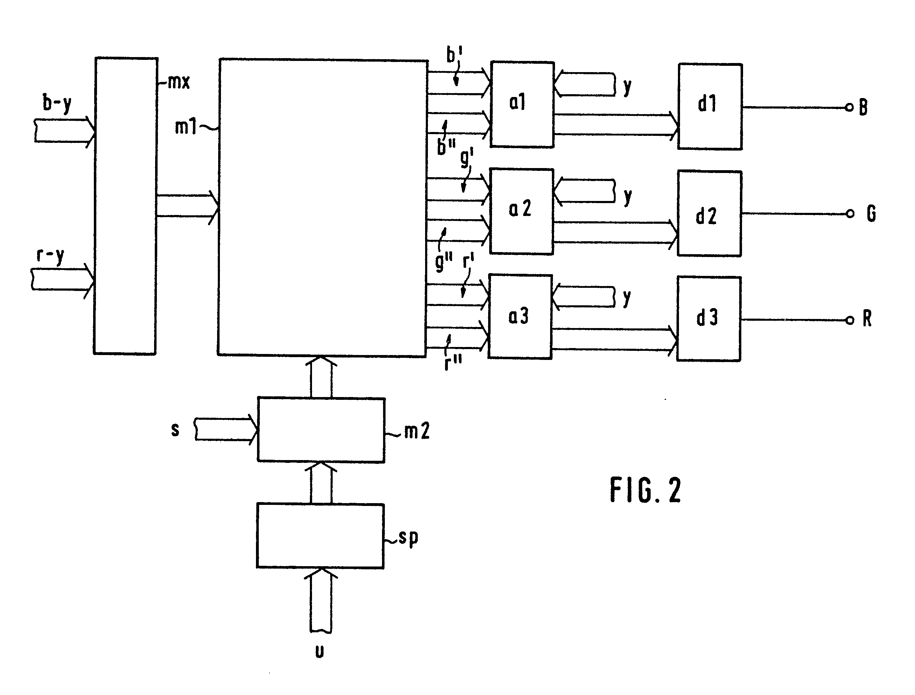

Die Fig. 2 zeigt ein Blockschaltbild der bereits oben kurz angedeuteten Ausführungsvariante der Erfindung, bei der die Werte der im Speicher sp enthaltenen Multiplikatoren b1 ... r2 durch ein äusseres Steuersignal u verändert werden können.

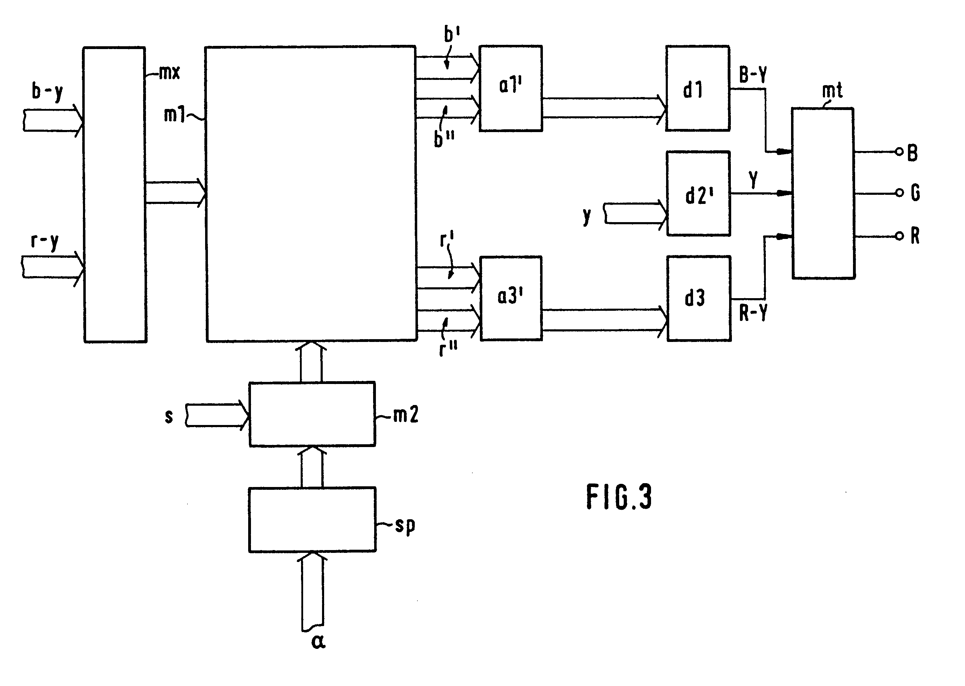

Die Fig. 3 zeigt das Blockschaltbild einer Abwandlung der erfindungsgemässen Digitalschaltung für die Farbtonkorrektur (im Englischen «tint control») bei NTSC-Farbfernsehempfängern. Der Speicher sp enthält dabei Zahlenwerte für die beiden Winkelfunktionen $\sin\alpha$, $\cos\alpha$ und ist durch ein das entsprechende Argument $\alpha$ repräsentierendes Signal angesteuert. Die beiden Multiplikatoren g1, g2 sind gleich null, so dass für sie keine Werte abgespeichert sind. Ebenso entfällt der zweite Addierer a2 nach den Fig. 1 und 2. Das Argument $\alpha$ ist dabei der vom Benutzer des Farbfernsehempfängers einstellbare oder der sich nach der oben erwähnten neueren NTSC-Norm selbst einstellende Phasenwinkel zwischen dem digitalen Blau-Differenzsignal b-y und dem Referenzträgersignal (burst).

Die verbliebenen Addierer a1′, a3′ erhalten bei der Abwandlung nach Fig. 3 nur die Signalpaare b′, b″; r′, r″, dagegen nicht das digitale Luminanzsignal y zugeführt; dieses ist dagegen dem zweiten Digital-Analog-Wandler d2′ zugeführt, der daraus das analoge Luminanzsignal Y erzeugt. Die beiden anderen Digital-Analog-Wandler d1, d3 erzeugen aus den Ausgangssignalen der beiden Addierer a1′, a2′ das jeweilige analoge Farbdifferenzsignal B-Y, R-Y.

Die eben erwähnten drei analogen Signale, sind der üblichen analogen R-G-B-Matrix mt zugeführt, an deren Ausgängen die analogen Farbsignale B, G, R entstehen.

In diesem Zusammenhang sei angemerkt, dass bei der Abwandlung nach Fig. 3 die Faktoren $b^*$, $r^*$ nach den Anordnungen der Fig. 1 und 2, wie ersichtlich ist, nicht zu den im Speicher sp abgelegten Werten gehören; sie sind vielmehr in bekannter Weise dadurch berücksichtigt, dass die R-G-B-Matrix mt entsprechend dimensioniert ist.

Die Multiplikatoren haben bei der Anordnung nach Fig. 3 folgende Werte:

$$b1 = r2 = \cos\alpha, b2 = \sin\alpha; r1 = -\sin\alpha;$$
$$g1 = g2 = 0.$$

Die Realisierung der negativen Sinusfunktion für den Multiplikator r1 kann entweder dadurch erreicht werden, dass beispielsweise die entsprechenden Werte in Zweierkomplement-Binärcode im Speicher sp abgespeichert sind oder dass der dritte Addierer a3′ auf Subtraktionsfunktion umschaltbar gemacht ist.

**Patentansprüche**

1. Integrierte Digitalschaltung für einen Farbfernsehempfänger mit digitaler Signalverarbeitung, der einen zwei demodulierte digitale Farbdifferenzsignale b–y, r–y jeweils mit einem digitalen Farbsättigungssignal s in Zeitmultiplexbetrieb vervielfachenden ersten Multiplizierer (m1) enthält, gekennzeichnet durch folgende Merkmale:
- der erste Multiplizierer (m1) gibt in Zeitmultiplex drei Farbsignalpaare b′, b″; g′, g″; r′, r″ ab, und seinem Farbsättigungssignal-Eingang ist ein zweiter Multiplizierer (m2) vorgeschaltet, dessen erstem Eingang das Farbsättigungssignal s zugeführt ist und dessen zweiter Eingang am Ausgang eines Multiplikatoren b1, b2; g1, g2; r1, r2 enthaltenden Speichers (sp) liegt, die wie folgt definiert sind:

$$b′ = s(b–y)b1, \quad b″ = s(r–y)b2$$
$$g′ = s(b–y)g1, \quad g″ = s(r–y)g2$$
$$r′ = s(b–y)r1, \quad r″ = s(r–y)r2,$$

- die Multiplikatoren (b1 ... r2) sind vom Hersteller des Farbfernsehempfängers fest abgespeichert oder während dessen Betrieb durch ein dem Speicher (sp) zugeführtes Signal (u) veränder- bzw. einstellbar, und
- jedes Signal eines Farbsignalpaars b′, b″; g′, g″; r′, r″ ist jeweils dem ersten bzw. dem zweiten bzw. dritten Eingang eines ersten bzw. zweiten bzw. dritten Addierers (a1, a2, a3) zugeführt, an deren jeweiligem dritten Eingang das digitale Luminanzsignal y liegt und deren jeweiligem Ausgang ein erster bzw. zweiter bzw. dritter Digital-Analog-Wandler (d1, d2, d3) nachgeschaltet ist, an deren jeweiligem Ausgang das analoge Blau- bzw. Grün- bzw. Rotsignal B, G, R entsteht.

2. Integrierte Digitalschaltung nach Anspruch 1 für die Ansteuerung üblicher Farbbildröhren mit einem analogen Luminanzsignal Y nach der Gleichung:

$$Y = 0{,}3R + 0{,}59G + 0{,}11B$$

dadurch gekennzeichnet, dass die Multiplikatoren folgende dezimale Zahlenwerte haben:

$$b1 = 1/b^*; \quad b2 = r1 = 0; \quad g1 = -0{,}19/b^*;$$
$$g2 = -0{,}51/r^*; \quad r2 = 1/r^*,$$

wobei bei b*, r* senderseitige Faktoren bezeichnet sind, mit denen das Blau- bzw. das Rot-Differenzsignal entsprechend der Sender-Farbfernsehnorm multipliziert ist und die für die PAL- und die NTSC-Norm zu b* = 0,493, r* = 0,877 bzw. für die SECAM-Norm zu b* = 1,5, r* = –1,9 festgelegt sind.

3. Integrierte Digitalschaltung nach Anspruch 1 für die Ansteuerung von Farbbildröhren, deren Farborte von denen üblicher Farbbildröhren, die mit einem analogen Luminanzsignal Y nach der Gleichung:

$$Y = 0{,}3R + 0{,}59G + 0{,}11B$$

anzusteuern sind, so abweichen, dass sie entsprechend der Gleichung

$$Y = 0{,}3R′R + 0{,}59G′G + 0{,}11B′B$$

anzusteuern sind, dadurch gekennzeichnet, dass die Multiplikatoren folgende dezimale Zahlenwerte haben:

$$b1 = 1/b^*; \quad b2 = r1 = 0; \quad g1 = -0{,}19B′/G′b^*;$$
$$g2 = -0{,}51R′/G′r^*; \quad r2 = 1/r^*,$$

wobei mit b*, r* senderseitige Faktoren bezeichnet sind, mit denen das Blau- bzw. das Rot-Differenzsignal entsprechend der Sender-Farbfernsehnorm multipliziert ist und die für die PAL- und die NTSC-Norm zu b* = 0,493, r* = 0,877 bzw. für die SECAM-Norm zu b* = 1,5, r* = –1,9 festgelegt sind.

4. Abwandlung der integrierten Digitalschaltung nach Anspruch 1 für einen NTSC-Farbfernsehempfänger, gekennzeichnet durch folgende Merkmale:
- die Multiplikatoren haben folgende Werte:

$$b1 = r2 = \cos\alpha;$$
$$b2 = \sin\alpha; \quad r1 = -\sin\alpha;$$
$$g1 = g2 = 0,$$

so dass der zweite Addierer (a2) entfällt, wobei $\alpha$ der vom Benutzer des Farbfernsehempfängers einstellbare oder sich selbsttätig einstellbare Phasenwinkel zwischen dem digitalen Blau-Differenzsignal b–y und dem Referenzträgersignal ist, und
- das digitale Luminanzsignal y ist nicht dem ersten und dem dritten Addierer (a1′, a3′), sondern ebenso wie deren Ausgangssignale eingangsseitig je einem Digital-Analog-Wandler (d1, d2′, d3) und dessen Ausgangssignal einer üblichen analogen R-G-B-Matrix (mt) zugeführt.

**Claims**

1. A digital integrated circuit for a color-television receiver with digital signal processing circuiry which contains a first multiplier (m1) which multiplies two demodulated digital color-difference signals b–y, r–y with a digital color-saturation signal s using time-division multiplexing, characterized by the following features:
- the first multiplier (m1) provides three multiplexed color-signal pairs b′, b″; g′, g″; r′, r″, and its color-saturation-signal input is preceded by a second multiplier (m2) whose first input is presented with the color-saturation signal s, and whose second input is connected to the output of a memory (sp) containing multiplier factors b1, b2; g1, g2; r1, r2 which are defined as follows:

$$b′ = s(b–y)b1, \quad b″ = s(r–y)b2$$
$$g′ = s(b–y)g1, \quad g″ = s(r–y)g2$$
$$r′ = s(b–y)r1, \quad r″ = s(r–y)r2;$$

- the multiplier factors (b1 ... r2) are permanently stored by the manufacturer of the color-television receiver or can be varied or adjusted during the operation of the receiver by means of a signal (u) applied to the memory (sp), and

– the two signals of the color-signal pairs b', b"; g', g"; r', r" are applied, respectively, to the first and second inputs of first, second, and third adders (a1, a2, a3) whose third inputs are presented with the digital luminance signal y, and whose outputs are followed, respectively, by first, second, and third digital-to-analog converters (d1, d2, d3) providing the analog blue B, green G, and red R signals, respectively.

2. A digital integrated circuit as claimed in claim 1, for driving conventional color-picture tubes with an analog luminance signal Y according to the equation

$$Y = 0.3R + 0.59G + 0.11B,$$

characterized in that the multiplier factors have the following decimal numerical values:

$$b1 = 1/b^*; b2 = r1 = 0; g1 = -0.19/b^*;$$
$$g2 = -0.51/r^*; r2 = 1/r^*,$$

where b* and r* are factors by which the blue- and red-minus-luminance signals, respectively, are multiplied at the transmitting end in accordance with the transmitter's color-television standard, and which are b* = 0.493 and r* = 0.877 for the PAL and NTSC standards, and b* = 1.5 and r* = –1.9 for the SECAM standard.

3. A digital integrated circuit as claimed in claim 1, for driving color-picture tubes whose color loci differ from those of conventional color-picture tubes to be driven with the analog luminance signal Y according to the equation

$$Y = 0.3R + 0.59G + 0.11B$$

in such a way that they have to be driven according to the equation

$$Y = 0.3R'R + 0.59G'G + 0.11B'B,$$

characterized in that the multiplier factors have the following decimal numerical values:

$$b1 = 1/b^*; b2 = r1 = 0; g1 = -0.19B'/G'b^*;$$
$$g2 = -0.51R'/G'r^*; r2 = 1/r^*;$$

where b* and r* are factors by which the blue- and red-minus-luminance signals, respectively, are multiplied at the transmitting end in accordance with the transmitter's color-television standard, and which are b* = 0.493 and r* = 0.877 for the PAL and NTSC standards, and b* = 1.5 and r* = –1.9 for the SECAM standard.

4. A modification of the digital integrated circuit as claimed in claim 1 for an NTSC color-television receiver, characterized by the following features:

– the multiplier factors have the following values:

$$b1 = r2 = \cos\alpha; b2 = \sin\alpha; r1 = -\sin\alpha;$$
$$g1 = g2 = 0,$$

so that the second adder (a2) is rendered unnecessary, where $\alpha$ is the phase angle between the digital blue-minus-luminance signal b–y and the color burst, which angle can be set by the user of the color-television receiver or adjusts itself automatically, and

– the digital luminance signal y is not fed to the first and third adders (a1', a3'), but it and the outputs of these adders are applied, respectively, to the inputs of three digital-to-analog converters (d1, d2', d3) whose outputs are fed to the conventional analog R-G-B matrix (mt).

## Revendications

1. Circuit intégré numérique pour récepteur de télévision en couleurs à traitement numérique des signaux comprenant un premier multiplicateur (m1) multipliant deux signaux numériques de différence de couleurs démodulés, b–y et r–y, par un signal numérique de saturation de couleurs s, en multiplexage temporel, caractérisé en ce que:

– le premier multiplicateur (m1) fournit trois paires de signaux multiplexées, b' et b", g' et g", r' et r", et son entrée de signal de saturation de couleurs est précédée par un second multiplicateur (m2) dont la première entrée est commandée par le signal de saturation de couleurs s et dont la seconde entrée est connectée à la sortie d'une mémoire (sp) contenant des facteurs de multiplication, b1 et b2, g1 et g2, r1 et r2, définis comme suit:

$$b' = s(b-y)b1, b'' = s(r-y)b2$$
$$g' = s(b-y)g1, g'' = s(r-y)g2$$
$$r' = s(b-y)r1, r'' = s(r-y)r2,$$

– les facteurs de multiplication, b1 ..., r2, sont inscrit de façon définitive par le fabricant du récepteur de télévision ou peuvent être modifiés ou ajustés au cours du fonctionnement du récepteur par un signal (u) appliqué à la mémoire (sp) et

– les deux signaux des paires de signaux, b' et b", g' et g", r' et r", sont respectivement appliqués à la première et à la seconde entrée d'un premier, d'un deuxième et d'un troisième additionneur (a1, a2, a3) dont la troisième entrée reçoit le signal de luminance numérique y et dont la sortie est respectivement suivie par un premier, un deuxième et un troisième convertisseur numérique analogique (d1, d2, d3) fournissant le signal analogique bleu, vert, rouge B, G, R.

2. Circuit intégré numérique selon la revendication 1, pour la commande de tubes image couleurs de type courant par un signal de luminance analogique Y conforme à l'équation:

$$Y = 0,3R + 0,59G + 0,11B,$$

caractérisé en ce que les facteurs de multiplication ont les valeurs numériques décimales suivantes:

$$b1 = 1/b^*; b2 = r1 = 0; g1 = -0,19/b^*;$$
$$g2 = -0,51/r^*; r2 = 1/r^*,$$

dans lesquelles b* et r* sont des facteurs définis à l'émission et par lesquels sont multipliés les signaux de différence du bleu et du rouge selon la norme de télévision couleurs de l'émetteur et qui ont pour valeurs, pour les normes PAL et NTSC, $b^* = 0,493$ et $r^* = 0,877$, et, pour la norme SECAM, $b^* = 1,5$ et $r^* = -1,9$.

3. Circuit intégré numérique selon la revendication 1, pour commander des tubes image couleurs dont le diagramme de couleurs diffère de celui des tubes image couleurs courants devant être commandés par un signal de luminance analogique Y conforme à l'équation:

$$Y = 0,3R + 0,59G + 0,11B$$

de sorte qu'ils doivent être commandés conformément à l'équation:

$$Y = 0,3R'R + 0,59G'G + 0,11B'B,$$

caractérisé en ce que les facteurs de multiplication ont les valeurs numériques décimales suivantes:

$$b1 = 1/b^*; b2 = r1 = 0; g1 = -0,19B'/G'b^*;$$
$$g2 = -0,51R'/G'r^*; r2 = 1/r^*,$$

dans lesquelles b* et r* sont des facteurs définis à l'émission et par lesquels sont multipliés les signaux de différence du bleu et du rouge selon la norme de télévision couleurs de l'émetteur et qui ont pour valeurs, pour les normes PAL et NTSC, $b^* = 0,493$ et $r^* = 0,877$, et, pour la norme SECAM, $b^* = 1,5$ et $r^* = -1,9$.

4. Variante du circuit intégré numérique selon la revendication 1, pour un récepteur de télévision couleurs selon la norme NTSC, caractérisée en ce que:

– les facteurs de multiplication ont les valeurs suivantes:

$$b1 = r2 = \cos \alpha, b2 = \sin \alpha;$$
$$r1 = -\sin \alpha; g1 = g2 = 0,$$

et ainsi le deuxième additionneur (a2) n'est pas nécessaire, $\alpha$ étant l'angle de phase entre le signal de différence de bleu b–y et la salve de référence, réglable par l'utilisateur du récepteur de télévision couleurs ou s'ajustant automatiquement,

– le signal de luminance numérique y n'est pas fourni au premier et au deuxième additionneur (a1', a3'), mais est fourni, en même temps que les sorties de ces additionneurs, aux entrées de trois convertisseurs numériques-analogiques (d1, d2', d3) dont les signaux de sortie sont fournis à une matrice R-G-B (mt) analogique classique.

FIG.1

B  G  R

d1  d2  d3

y  y  y

a1  a2  a3

b'  b''  g'  g''  r'  r''

mx  m1

b-y  r-y

m2  sp

s

FIG. 2

FIG.3